# EUROPEAN PATENT APPLICATION

(11) **EP 4 671 590 A1**
(43) Date of publication of application: **31.12.2025**
(21) Application number: 24185371.2
(22) Date of filing: 28.06.2024
(51) Int. Cl.: F16L 25/00, F16L 37/098

(54) **CONNECTION MEANS FOR CONNECTING A PIPE TO A COUNTERPART OF A HOUSEHOLD APPLIANCE AND METHOD FOR CONNECTING A PIPE TO A COUNTERPART OF A HOUSEHOLD APPLIANCE**

(71) Applicant: Gorenje Gospodinjski Aparati, d.o.o., 3320 Velenje (SI)
(72) Inventor: Domen, agar, 8216 Trebnje (SI)
(74) Representative: Isarpatent

(57) **Abstract**

A connection means (10) for connecting a pipe (1) to a counterpart (CP) of a household appliance (100), comprises a protruding part (2) which is located on an outer surface of the pipe (1) and which protrudes away from the pipe (1), wherein the protruding part (2) forms a ridge (2a) towards a first direction of the pipe (1) and an pushing area (2b) towards a second direction of the pipe (1) which is opposite to the first direction; a catch housing (3) arranged at the counterpart (CP) with a front opening (3a) for receiving the pipe (1) and having a fluid opening (3b) for a fluid connection between an interior of the catch housing (3) and the counterpart (CP); a first side arm (5) and a second side arm (6) which are each extending along a lateral side of the catch housing (3) and outside the catch housing (3) and a clamp part (7) which connects the first side arm (5) with the second side arm (6) at least partly in an axial circumference around a central axis of the catch housing (3) and outside the catch housing (3), wherein the clamp part (7) has a locking region (8) at a half length of the clamp part (7) between the side arms which locking region (8) forms a locking ridge (8a) towards the front opening (3a) and an inclined face or pushing face (8b) facing away from the front opening (3a), and wherein the first side arm (5) and the second side arm (6) are each fixedly connected to the catch housing (3) at their respective ends facing away from the front opening (3a) thereby forming a bendable lever each, wherein when in an equilibrium state of the bendable levers the pipe (1) can be locked in the catch housing (3) with the locking ridge (8a) being placed in contact to the ridge (2a) and the pipe (1) can be unlocked from the catch housing (3) when bending the levers and separating the locking ridge (8a) from the ridge (2a).

## Description

### FIELD OF THE INVENTION

The present invention relates to connection means for connecting a pipe to a counterpart of a household appliance and to a method for connecting a pipe to a counterpart of a household appliance using connection means.

### BACKGROUND OF THE INVENTION

Connection means for connecting a pipe counterpart in oder to achieve a fluid connection typically use clamps or brackets for fixedly attaching the pipe at a corresponding counterpart, wherein such connections need an increased effort of required work when fixing the pipe to the counterpart and when releasing it. Therefore, from the known prior art there remain at present technically challenging issues regarding the assembly and maintenance of home appliances, for example in the secure and efficient connection of water pipes to solenoid water valves or other components within such issues such as washing machines.

A typical connection method relies on deformable tubes, typically made from EPDM synthetic rubber or corrugated PP with overmoulded TPE sleeves, sealed with an additional clamp to ensure tightness. Such concepts require a tight fit between the pipe and the counterpart, often requiring a significant force for assembly and the application of lubricants to reduce this force. Further, the need for an additional clamp mounting can complicate the connection and can necessitate special tools and an automation of this assembly process can get very challenging due to the unpredictable deformation of elastic materials, which makes robot manipulation almost impossible.

Document DE 10031166 A1 describes a plug-in locking connection for corrugated hoses. This locking is achieved by the fitting of a corrugated pipe with annular ribs onto a connecting piece with a holding device. The holding device has at least two lamellar retaining elements, which have radially extending latches on their ends. This latches engage with the annular ribs on the pipe. The protrusions can be moved radially outwards by a lever operation to disengage the latch and enable the disconnection of the pipe.

The disadvantage of the pipe connection system of the state of the art is, that the length of the lamellar retaining elements is substantial relative to the connection diameter. This is especially true for the preferred embodiment, where the levers used for easy disconnection make the whole connection area even longer. This issue is partially solved in the second embodiment of the invention, where the levers are not present. In this embodiment however the disconnection becomes a hussle, since a tool such as a thin flathead screwdriver is needed to pry open the levers. This is not a simple task since the connection has at least two levers and they need to be open simultaneously. Furthermore, using such a tool introduces a risk of overstretching the levers during pipe disconnection, since there is nothing preventing the user to pry the lever to an extent in which the internal stresses exceed the yield strength of the material. This could permanently impair the reliability of the connection.

### SUMMARY OF THE INVENTION

The invention is thus based on the problem of creating a non-permanent connection for corrugated pipe hoses, in particular for use in washing machines, washer-dryers, dryers or dishwashers, which has a simple locking mechanism, is compact and does not substantially increase the length of the connection area, is designed in a way to prevent overstretching of the levers during disconnection, enables easy manipulation without tools by hand even by pressing just one of multiple levers. The invention does not increase the complexity of the production processes of each of the parts and in this way keeps the production cost on the same level and at the same time significantly reduces the assembly costs. All of this is possible mainly because the movement of the lamellar retaining elements (side arms) can be tangential instead of radial (as in prior art) when seen relative to the main extent of the side arms.

It is an object of the invention to improve the way of connecting and releasing a pipe in fluid connection to a counterpart in a household appliance.

The object is solved by the subject-matter of the independent claims.

The present invention pertains to connection means for connecting a pipe to a counterpart of a household appliance according to claim 1 and to a method for connecting a pipe to a counterpart of a household appliance using connection means according to claim 14.

Preferred embodiments are subject of the dependent claims.

According to the invention the connection means for connecting a pipe to a counterpart of a household appliance comprise a protruding part which is located on an outer surface of the pipe and which protrudes away from the pipe, wherein the protruding part forms a ridge towards a first direction of the pipe and a pushing area towards a second direction of the pipe which is opposite to the first direction. The connection means further comprises a catch housing arranged at the counterpart with a front opening for receiving the pipe and having a fluid opening for a fluid connection between an interior of the catch housing and the counterpart; at least one side arm extending along a lateral side of the catch housing and outside the catch housing and a clamp part connected to the side arm and at least partly in an axial circumference around a central axis of the catch housing and outside the catch housing, wherein the clamp part has a locking region which locking region forms a locking ridge towards the front opening and an inclined face or pushing face facing away from the front opening, and wherein the at least one side arm is each fixedly connected to the catch housing at its respective end facing away from the front opening thereby forming a bendable lever, wherein when in an equilibrium state of the bendable levers the pipe can be locked in or to the catch housing with the locking ridge being placed in contact to the ridge and the pipe can be unlocked from the catch housing when bending the levers and separating the locking ridge from the ridge.

Since the levers are fixed at one end and can be bent at another end (opposite to the fixed end) the free end can move by bending the lever along a tangential direction (trajectory) of the corresponding lever (side arm). Said tangential motion can be relative to an imaginary circle path described by the moving (free) end of the side arm which would have its fixed end corresponding to the middle/center of such a circle.

The connection means can provide an improved fluid connection system specifically of pipe-to-component connections, for example in a washing machine and a quick connection and release mechanism of the pipe to and from the counterpart.

The pushing area can be an inclined area. By pushing the pushing area to the locking region the latter can be deviated from an equilibrium (transferring the pushing force to bend the free end of the side arms thereby moving them in the tangential manner) such to open the front opening of the catch housing and to accept the pipe.

The connection means consider components which are needed to provide a fluid connection for a liquid for the household appliance, for example considering the pipe and its relevant components and the counterpart (with catch housing) and its relevant components.

The locking region at a half length (turn) of the clamp part at its extent between the side arms can be located at the bottom if the clamp part spans around a lower part in front or around the front opening of the catch housing. For the case that the clamp part spans around a lateral side, the locking region is located on a right or left region relative to the front opening or at the top if the clamp part spans around an upper part in front or around the front opening of the catch housing.

According to a further embodiment of the connection means the pipe is a corrugated hose.

According to a further embodiment of the connection means the latter comprises a first side arm and a second side arm which are each extending along a lateral side (and in axial direction along the central axis of the catch housing) of the catch housing and outside the catch housing and a clamp part which connects the first side arm with the second side arm at least partly in an axial circumference around a central axis of the catch housing and outside the catch housing, wherein the clamp part has a locking region at a half length of the clamp part between the side arms.

According to a further embodiment of the connection means the protruding part is located on a predefined distance from a front end of the pipe and the second direction with the pushing area faces towards the front end of the pipe and wherein the protruding part is a separate component attached to the pipe or is integral with the pipe.

The protruding part can be rigid or flexible.

According to a further embodiment of the connection means the catch housing comprises at least one stud which extends outward from the surface of the catch housing at a limiting distance from the front opening (or at) and the limiting distance extending in axial direction of the central axis of the catch housing behind the clamp part or behind the locking region such to limit a deflection of the clamp part when bending the levers.

The studs can limit the deflection of the clamp part and of the side arms and prevent their breaking during the deformations occuring in service procedures or for another cases when releasing the connection of the pipe from the catch housing.

The stud can also be placed directly (an axial view) at the front opening.

According to a further embodiment of the connection means the pipe has a cylindrical symmetry and the catch housing has a cylindrical symmetry along the central axis of the catch housing.

According to a further embodiment of the connection means the pipe has a rigid front end part extending between the front end of the pipe and the protruding part and a predefined distance between the front end and the protruding part being equal or less than a length of an internal opening of the catch housing.

According to a further embodiment of the connection means the pipe comprises an sealing element which is arranged around the rigid front end part to seal the front end inside the internal opening of the catch housing.

According to a further embodiment of the connection means when in an equilibrium state of the bendable lever(s) the locking ridge is located at a predefined locking distance from the front opening of the catch housing between which locking distance the protruding part can be fixedly placed against axial movement along the central axis of the catch housing.

According to a further embodiment of the connection means the at least one side arm or the first side arm and the second side arm are each fixedly connected to the catch housing at their respective ends facing away from the front opening in a resilient manner providing a lock status of the pipe in the catch housing by means of the locking region when the first side arm and the second side arm are in equilibrium state and a removable status of the pipe when the first side arm and the second side arm are bent tangentially relative to the axis (length axis of the catch housing) to an amount where the locking region unlocks (no overlap of the adjacent ridges) the protruding part from axial movement along the central axis of the catch housing.

According to a further embodiment of the connection means the counterpart is a water valve and the household appliance is a washing machine or a dish washer.

According to a further embodiment of the connection means the at least one side arm or the first side arm and the second side arm comprise a pushing area each for locating a finger of a users hand for bending the first side arm and/or the second side arm.

Due to the pushing area the area where to apply a force for bending the side arms can be increased and the location of the force improved.

According to a further embodiment of the connection means the catch housing has an inclined margin in an internal opening of the catch housing and next to the front opening of the catch housing.

The protruding part can correspond to a locking ring and with locking it into the catch housing a connection without tight fits or clamps or other separate locking components which need to be separately attached or fixed can be achieved. The connection means can feature an innovative valve design with a cantilevered catch and polypropylene pipes with a corrugated design for flexibility and sealing what can simplify assembly, allow for easy disassembly, and enhance connection reliability and durability.

Further, an axial relative movement of the pipe can be lowered or eliminated through the particular construction rather than relying on traditional tight fits and clamps. The essence of this innovation can be achieved by the utilization of the protruding part on the pipe and a deformable catch mechanism on the counterpart, for example on a valve, or vice versa, to secure the connection. This design principle is applied across various embodiments of the invention, showcasing its versatility and effectiveness in enhancing connection security.

The counterpart with the catch housing can correspond to a valve sleeve redesigned to include a deformable catch along its length, wherein said catch can be characterized by its cantilevered bending clamp part with a single engagement tooth as locking part and the first and second arms as dual beam supports acting as leaf springs, in particular against the tangential bending.

Such a particular structure can improve simplicity and cost-efficiency, eliminating the need for additional components and simplifying the manufacturing process by integrating the catch directly during the valve's molding, for example.

Further, the pipe form can be optimized for enhanced connection integrity and flexibility. The pipe can be made entirely of polypropylene, the pipe can feature a rigid front end part to ensure a stable connection and a corrugated central section to maintain flexibility. In the rigid front end part a sealing element groove on the outer wall or inner wall of the front end part can be present. The sealing element can be an O-ring.

The pipe rigid front end can fit smoothly into the catch housing (for example the valve's sleeve). The interaction between the protruding part and the deformable catch as clamp part allows for an efficient connection, securely locking the components together once the protruding part overcomes the locking inclined face or pushing face (which functions as a catch's ramp). Disassembly can be straightforward, requiring only a simple press on the arms to bend them (tangentially) (or only one of them) and to release the connection.

The efficiency, reliability, and durability of pipe connections in appliances can be significantly improved.

Further, it is also possible to apply alternative catch forms, for example with multiple teeth (locking regions) or different spring mechanisms to enhance connection security or assembly ease. Also material variations are possible for use of advanced composite materials for pipes and catch housings to increase durability or flexibility.

Further, protruding part and sealing element adjustments are possible with modifications in size or shape to improve sealing efficiency and compatibility with various pipe diameters.

Also a non-symmetrical pipe form (and catch housing) is possible with an introduction of unique geometric features to prevent rotational movement and facilitate orientation-specific assembly.

Further, automation-friendly features can be applied causing optimizations for automated assembly lines, including modifications for easier robotic engagement and visual/tactile indicators for automated orientation.

According to the invention the method for connecting a pipe to a counterpart of a household appliance using connection means according to the invention comprises the steps of placing the pipe with the front end into the front opening and pushing the rigid front end part into an internal opening of the catch housing, thereby pressing the pushing area of the protruding part to the inclined face or pushing face of the locking region and thereby deflecting the locking region from an equilibrium state until the protruding part overcomes the locking region in axial direction along the central axis of the catch housing and afterwards the ridge of the protruding part becomes axially locked by the locking ridge of the locking part; and/or (when locked in) pushing the at least one side arm (for example downwards or upwards (tangentially)) from its unbent state and thereby bending the at least one side arm out from an equilibrium position of the locking region (when pushing the arms downwards or upwards, in particular tangentially, the locking region will move since there is a rigid connection between the side arms and the clamp part) and thereby separating the ridge of the protruding part from the locking ridge of the locking part to an unlocked position and in the unlocked position pulling the pipe out from the catch housing at least until the ridge overcomes the locking ridge in the axial direction along the central axis of the catch housing.

All mentioned features and their advantages can apply also to a corresponding method for operating and/or applying the connection means.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate a comparative embodiment and embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 shows a connection means for connecting a pipe to a counterpart of a household appliance according to an embodiment of the invention.
Fig. 2a, 2b and 2c show a longitudinal cut through a catch housing of the connection means with different stages of inserting the pipe into the catch housing according to an embodiment of the invention.
Fig. 3 shows connection means at which the connection is released from the counterpart of a household appliance.
Fig. 4 shows the pipe and the counterpart from Fig. 3 where the pipe is already released from the catch housing.
Fig. 5 shows a longitudinal cut through the pipe with the protruding part and through the adjacent locking region.
Fig. 6 shows a top view on the connection means with the inserted pipe according to an embodiment of the invention.
Fig. 7 shows a longitudinal cut through a catch housing of the connection means with an inserted pipe according to Fig. 6.
Fig. 8 shows a catch housing with a counterpart according to another embodiment of the invention.
Fig. 9 shows a catch housing with a counterpart according to another embodiment of the invention.
Fig. 10 shows a block diagram of method steps of a method for connecting a pipe to a counterpart of a household appliance according to an embodiment of the invention.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

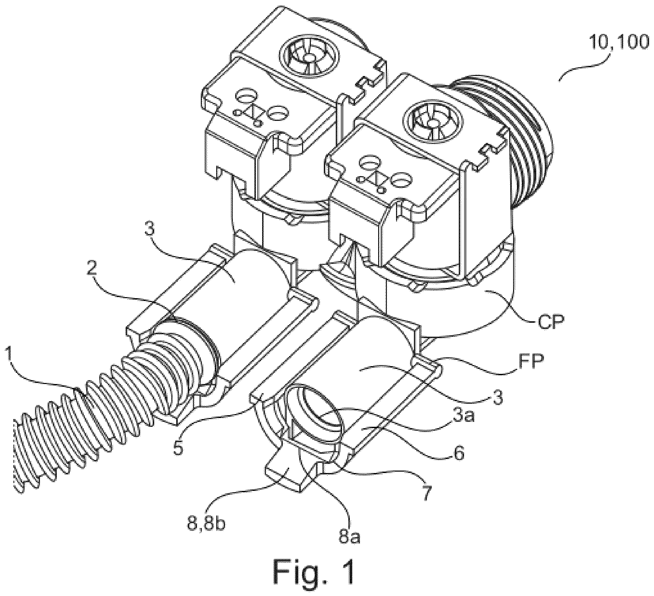

Fig. 1 shows a connection means for connecting a pipe to a counterpart of a household appliance according to an embodiment of the invention.

In detail Fig. 1 shows two catch housings 3 which are arranged next to each other and which are linked in fluid connection with a corresponding valve and a liquid system each, for example in a washing machine.

The connection means 10 for connecting a pipe 1 to a counterpart CP of a household appliance 100 comprises a protruding part 2 which is located on an outer surface of the pipe 1, for example in ring-like symmetry. Further, a catch housing 3 is arranged at the counterpart CP with a front opening 3a (facing towards the pipe 1) for receiving the pipe 1 and having a fluid opening (not shown) for a fluid connection between an interior of the catch housing 3 and the counterpart CP. Further, a first side arm 5 and a second side arm 6 which are each extending along a lateral side of the catch housing 3 are provided and extend outside the catch housing 3 and a clamp part 7 connects the first side arm 5 with the second side arm 6 at least partly in an axial circumference around a central axis of the catch housing 3 and on the lower side of the pipe 1 and outside the catch housing 3, wherein the clamp part 7 has a locking region 8 at a bottom of the clamp part 7 which locking region 8 forms a locking ridge 8a towards the front opening 3a and an inclined face 8b facing away from the front opening 3a, and wherein the first side arm 5 and the second side arm 6 are each fixedly connected to the catch housing 3 at their respective ends at fixing points FP facing away from the front opening 3a thereby forming a bendable lever (arm) each, wherein when in an equilibrium state of the bendable levers the pipe 1 can be locked in or to the catch housing 3 with the locking ridge 8a being placed in contact to the ridge of the protruding part 2 and the pipe 1 can be unlocked from the catch housing 3 when bending the levers and separating the locking ridge 8a from the ridge of the protruding part 2.

As shown in Fig. 1 the pipe 1 can be a corrugated hose.

On the left side the pipe 1 is locked into the catch housing 3 and on the right side there is no pipe and the front opening 3a of the catch housing 3 is open.

At the fixing points FP the arms 5 and 6 do not rotate but can bent on their side opposite to the fixing points FP in an elastic manner to release/unlock the protruding part 2.

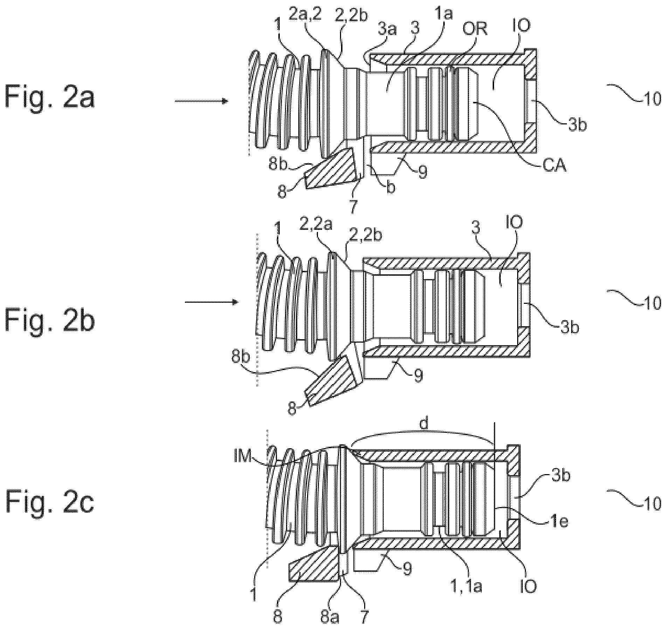

Fig. 2a, 2b and 2c show a longitudinal cut through a catch housing of the connection means with different stages of inserting the pipe into the catch housing according to an embodiment of the invention.

In Fig. 2a the pipe 1 is already put into the internal opening IO of the catch housing 3 such that the rigid front end 1a slides along the central axis CA of the catch housing 3 but has not yet overcome the locking region 8 with the protruding part 2 with its ridge 2a. In the situation as shown in Fig. 2a the pushing area 2b (which can be an inclined area) of the protruding part 2 starts touching the inclined face 8b of the locking region 8 but does not yet significantly deflect the locking region 8 and the clamp part 7 from the equilibrium state, therefore the locking distance 8d (and delimiting distance b to the studs 9) remains still at an initial value. The rigid front end 1a of the pipe 1 can have an sealing element OR with which it can be pushed into the internal opening IO through the front opening 3a. The internal opening IO can have a fluid opening 3b to the remaining components of the counterpart.

The catch housing 3 comprises at least one stud 9 which extends outward from the surface of the catch housing 3 behind the locking region 8 such to limit a deflection of the clamp part 7 when bending the levers.

The first direction extends along the catch housing (axially) and outward of it.

In Fig. 2b a further stage of the placing of pipe 1 is shown and at this stage the pushing area 2b of the protruding part 2 starts pushing the inclined face 8b of the locking region 8 downwards (and away from the protruding part 2) in order to deflect the locking region 8 from equilibrium and lower the locking distance to the stud 9. Since the protruding part 2 can be formed from a flexible material the pushing area 2b and the ridge 2a can be slightly deformed but mainly the locking region 8 is deflected by the motion of the pipe 1 into the internal opening IO of the catch housing 3.

In Fig. 2c a stage is shown where the pipe 1 is at the locking position inside the catch housing 3 and the protruding part 2 is placed inside the locking distance 8d and the locking region 8 has moved to equilibrium state again since the protruding part 2 with the ridge 2a and the pushing area 2b (which can be an inclined area) has axially overcome the inclined face 8b and the locking ridge 8a. In this stage the side arms (not shown) push the locking region 8 and the clamp part 7 again to the equilibrium state and place the locking ridge 8a at a height (vertical) that partly overlaps the ridge 2a of the protruding part 2 and locks it in axial direction towards out of the catch housing 3. In this stage the rigid front end 1a with its front end 1e faces the fluid opening 3b of the catch housing 3 and the sealing element seals said front region for fluid connection. In this stage the distance d (length of the rigid front end 1a) can be entirely inside the catch housing 3. At the front opening 3a the catch housing 3 can have an inclined margin IM for better accepting the front face (pushing area 2b) of the protruding part 2.

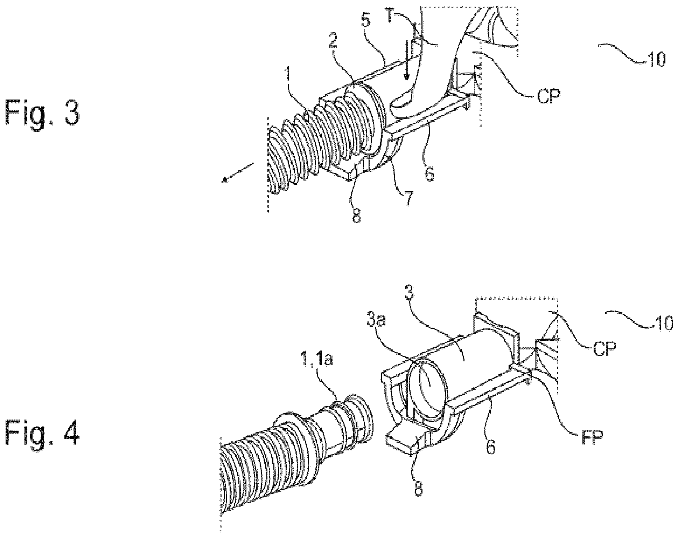

Fig. 3 shows connection means at which the connection and the pipe is released from the counterpart of a household appliance.

In Fig. 3 the pipe 1 is locked in the catch housing 3 of the counterpart CP and in order to release said connection/lock a user can push with the finger(s) T on the first side arm 5 or (as shown in Fig. 3) on the second side arm 6, or on both, such to elastically deflect the side arm(s) from their equilibrium position and thereby deflect the clamp part 7 in a direction downwards and away from the pipe 1 and from the protruding part 2. In particular, the locking region 8 can be deflected from the protruding part 2 and allow the protruding part 2 being pulled out from the locking region 8 and to overcome it in axial direction. For this purpose the arms and the clamp part 7 and the locking region 8 must stay deflected to such an amount that the protruding part 2 with its ridge can overcome the axial position of the locking region 8 (in the light of the invention the wording "axial" represents the direction along the central axis of the catch housing and opposite to it).

Further, Fig. 3 shows that the clamp part 7 and the locking region 8 connect the side arms 5 and 6 in front of the front opening of the catch housing 3 such that the clamp part 7 partly surrounds the pipe 1 in axial circumference around the direction of the central axis of the catch housing 3.

Fig. 4 shows the pipe and the counterpart from Fig. 3 where the pipe is already released from the catch housing.

In Fig. 4 a similar system of the connection means 10 with the counterpart CP and the pipe 1 is shown as in Fig. 3 but with the difference that the pipe 1 is pulled out from the catch housing 3, also entirely with its rigid front end part 1a. After the pipe 1 is unlocked and pulled out from the catch housing 3 and from the front opening 3a the side arms 5 and 6 can be released again and deflected to equilibrium state by overcoming the mechanical tension in the arms and from the fixing points FP when there is no external force on the side arms 5 and/or 6 any more.

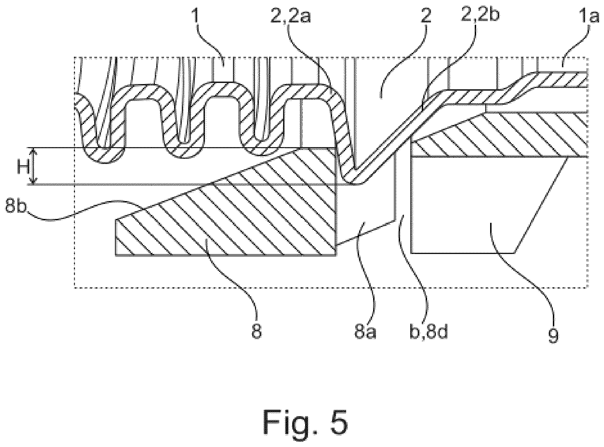

Fig. 5 shows a longitudinal cut through the pipe with the protruding part and through the adjacent locking region.

The protruding part 2 can be integral with the corrugated pipe 1 and the protruding part 2 forms a ridge 2a towards a first direction of the pipe 1 and a pushing area 2b towards a second direction of the pipe 1 which is opposite to the first direction. For locking the protruding part 2 into the space b (8d, also there can be such a distance to the studs 9) between the locking ridge 8a of the locking region 8 and the catch housing when the rigid front end part 1a is placed into the catch housing the locking ridge 8a and the ridge 2a of the protruding part 2 have to contact each other and block an axial movement of the pipe 1 in a direction outward from the catch housing (along a central axis of the catch housing). Therefore, when seen in the axial direction along the central axis of the catch housing (and of the pipe 1) the locking ridge 8a and the ridge 2a of the protruding part 2 can overlap each other by a height H, for example 1.5 mm. This height H can hold true if the side arms are not bent in equilibrium state. In Fig. 5 the rear side of the locking ridge 8a is shown (as surface stretching into the plane of the figure) and the clamp part is not shown.

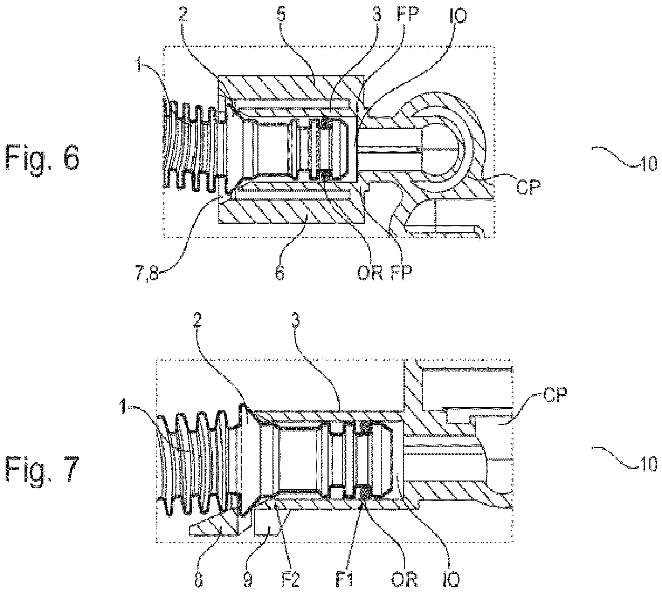

Fig. 6 shows a top view on the connection means with the inserted pipe according to an embodiment of the invention.

In Fig. 6 the catch housing 3 is shown from top and also in a cut view such that the interior of the internal opening IO with the pipe 1 inside it is visible. The catch housing 3 can have a rigid connection to the remaining components of the counterpart CP or be integral with it. Inside the internal opening IO the pipe 1 and the fluid connection can be sealed with the sealing element at the pipe 1. The pipe 1 in the shown position is locked by the locking region 8 and the particular position of the clamp part 7. The side arms 5 and 6 extend along the catch housing 3, being linked to the catch housing 3 at one of their ends at fixing points FP each and spaced apart from the catch housing 3 at their remaining part.

Fig. 7 shows a longitudinal cut through a catch housing of the connection means with an inserted pipe according to Fig. 6.

In Fig. 7 the same connection of the pipe 1 to the catch housing 3 is shown as this is the case in Fig. 6 but from a side view. In this view it can be seen that the rigid front end part 1a of the pipe 1 can be axially aligned such that it has two significant contact points with the catch housing 3, in particular a first point F1 at the sealing element, which can be placed close to the front end 1e and a second point F2 close to or at the ridge 2a of the protruding part. Since these two points F1 and F2 are located at a predefined distance from each other the axial alignment of the rigid front end part 1a can be improved.

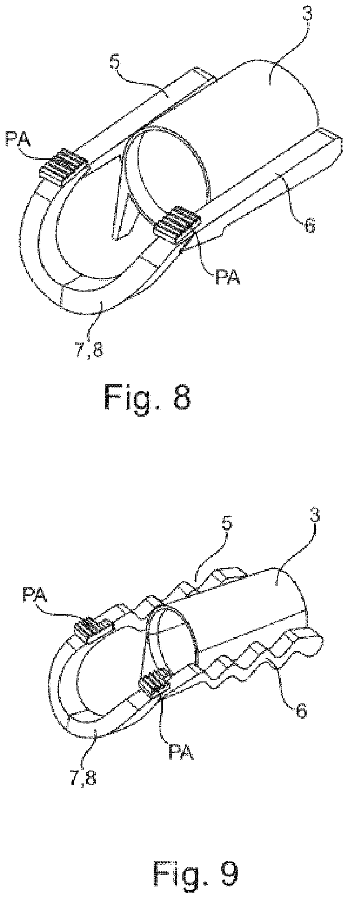

Fig. 8 shows a catch housing with a counterpart according to another embodiment of the invention.

In Fig. 8 an alternative form of the first and second side arms 5 and 6 is shown, in particular with an increased length along the catch housing 3 and having particular pushing areas PA each at a location of the particular arm (5, 6) which is located in front of the catch housing 3 when seen along the central axis of the catch housing 3. In this regard also the clamp part 7 has a greater distance from the front opening of the catch housing than this is the case in the embodiment shown in Fig. 1 for example. The locking region 8 has no block form as the embodiment of Fig. 1.

Fig. 9 shows a catch housing with a counterpart according to another embodiment of the invention.

In Fig. 9 a catch housing 3 with side arms 5 and 6 is shown which is very similar to the embodiment shown in Fig. 8. The only difference is in the shape of the side arms 5 and 6 along the catch housing 3 and starting from the pushing areas PA wherein the side arms 5 and 6 have a wave form of their upper and lower surface.

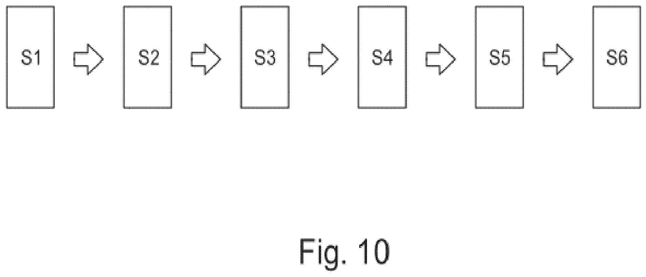

Fig. 10 shows a block diagram of method steps of a method for connecting a pipe to a counterpart of a household appliance according to an embodiment of the invention.

According to the method for connecting a pipe to a counterpart of a household appliance using connection means according to the invention the method can comprise the steps of placing S1 the pipe with the front end into the front opening and pushing S2 the rigid front end part into an internal opening of the catch housing, thereby pressing S3 the pushing area of the protruding part to the inclined face or pushing face of the locking region and thereby deflecting the locking region from an equilibrium state until the protruding part overcomes the locking region in axial direction along the central axis of the catch housing and afterwards the ridge of the protruding part becomes axially locked by the locking ridge of the locking part; and/or pushing S4 the at least one side arm from its unbent state and thereby bending S5 the at least one side arm out from an equilibrium position of the locking region and thereby separating the ridge of the protruding part from the locking ridge of the locking part to an unlocked position and in the unlocked position pulling S6 the pipe out from the catch housing at least until the ridge overcomes the locking ridge in the axial direction along the central axis of the catch housing.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents.

## Claims

1. Connection means (10) for connecting a pipe (1) to a counterpart (CP) of a household appliance (100), comprising:
- a protruding part (2) which is located on an outer surface of the pipe (1) and which protrudes away from the pipe (1), wherein the protruding part (2) forms a ridge (2a) towards a first direction of the pipe (1) and a pushing area (2b) towards a second direction of the pipe (1) which is opposite to the first direction;
- a catch housing (3) arranged at the counterpart (CP) with a front opening (3a) for receiving the pipe (1) and having a fluid opening (3b) for a fluid connection between an interior of the catch housing (3) and the counterpart (CP);
- at least one side arm (5, 6) extending along a lateral side of the catch housing (3) and outside the catch housing (3) and a clamp part (7) connected to the side arm (5, 6) and at least partly in an axial circumference around a central axis of the catch housing (3) and outside the catch housing (3), wherein the clamp part (7) has a locking region (8) which locking region (8) forms a locking ridge (8a) towards the front opening (3a) and an inclined face or pushing face (8b) facing away from the front opening (3a), and wherein the at least one side arm (5, 6) is fixedly connected to the catch housing (3) at its respective end facing away from the front opening (3a) thereby forming a bendable lever, wherein when in an equilibrium state of the bendable lever the pipe (1) can be locked in or to the catch housing (3) with the locking ridge (8a) being placed in contact to the ridge (2a) and the pipe (1) can be unlocked from the catch housing (3) when bending the levers and separating the locking ridge (8a) from the ridge (2a).

2. Connection means (10) according to claim 1, wherein the pipe (1) is a corrugated hose.

3. Connection means (10) according to claim 1 or 2 further comprising a first side arm (5) and a second side arm (6) which are each extending along a lateral side of the catch housing (3) and outside the catch housing (3) and the clamp part (7) connects the first side arm (5) with the second side arm (6) at least partly in an axial circumference around a central axis of the catch housing (3) and outside the catch housing (3), wherein the clamp part (7) has a locking region (8) at a half length of the clamp part (7) between the side arms (5, 6).

4. Connection means (10) according to any of claims 1 to 3, wherein the protruding part (2) is located on a predefined distance (d) from a front end (1e) of the pipe (1) and the second direction with the pushing area (2b) faces towards the front end (1e) of the pipe (1) and wherein the protruding part (2) is a separate component attached to the pipe (1) or is integral with the pipe (1).

5. Connection means (10) according to any of claims 1 to 4, wherein the catch housing (3) comprises at least one stud (9) which extends outward from the surface of the catch housing (3) at a limiting distance (b) from the front opening (3a) and the limiting distance (b) extending in axial direction of the central axis of the catch housing (3) behind the clamp part (7) or behind the locking region (8) such to limit a deflection of the clamp part (7) when bending the levers.

6. Connection means (10) according to any of claims 1 to 5, wherein the pipe (1) has a cylindrical symmetry and the catch housing (3) has a cylindrical symmetry along the central axis of the catch housing (3).

7. Connection means (10) according to any of claims 1 to 6, wherein the pipe (1) has a rigid front end part (1a) extending between the front end (1e) of the pipe (1) and the protruding part (2) and a predefined distance (d) between the front end (1e) and the protruding part (2) being equal or less than a length of an internal opening (IO) of the catch housing (3).

8. Connection means (10) according to claim 7, wherein the pipe (1) comprises a sealing element (OR) which is arranged around the rigid front end part (1a) to seal the front end (1e) inside the internal opening (IO) of the catch housing (3).

9. Connection means (10) according to any of claims 1 to 8, wherein when in an equilibrium state of the bendable levers the locking ridge (8a) is located at a predefined locking distance (8d) from the front opening (3a) of the catch housing (3) between which locking distance (8d) the protruding part (2) can be fixedly placed against axial movement along the central axis of the catch housing (3).

10. Connection means (10) according to any of claims 1 to 9, wherein the at least one side arm (5, 6) or the first side arm (5) and the second side arm (6) are each fixedly connected to the catch housing (3) at their respective ends facing away from the front opening (3a) in a resilient manner providing a lock status of the pipe (1) in the catch housing (3) by means of the locking region (8) when the first side arm (5) and the second side arm (6) are in equilibrium state and a removable status of the pipe (1) when the first side arm (5) and the second side arm (6) are bent to an amount where the locking region (8) unlocks the protruding part (2) from axial movement along the central axis of the catch housing (3).

11. Connection means (10) according to any of claims 1 to 10, wherein the counterpart (CP) is a water valve and the household appliance (100) is a washing machine or a dish washer.

12. Connection means (10) according to any of claims 1 to 11, wherein the at least one side arm (5, 6) or the first side arm (5) and the second side arm (6) comprise a pushing area (PA) each for locating a finger of a users hand for bending the first side arm (5) and/or the second side arm (6).

13. Connection means (10) according to any of claims 1 to 12, wherein the catch housing (3) has an inclined margin (IM) in an internal opening (IO) of the catch housing (3) and next to the front opening (3a) of the catch housing (3).

14. Method for connecting a pipe (1) to a counterpart (CP) of a household appliance (100) using connection means (10) according to any of claims 1 to 13, comprising the steps:
- Placing (S1) the pipe (1) with the front end (1e) into the front opening (3a) and pushing (S2) the rigid front end part (1a) into an internal opening (IO) of the catch housing (3), thereby pressing (S3) the pushing area (2b) of the protruding part (2) to the inclined face or pushing face (8b) of the locking region (8) and thereby deflecting the locking region (8) from an equilibrium state until the protruding part (2) overcomes the locking region (8) in axial direction along the central axis of the catch housing (3) and afterwards the ridge (2a) of the protruding part (2) becomes axially locked by the locking ridge (8a) of the locking part (8); and/or
- Pushing (S4) the at least one side arm (5, 6) from its unbent state and thereby bending (S5) the at least one side arm (5, 6) out from an equilibrium position of the locking region (8) and thereby separating the ridge (2a) of the protruding part (2) from the locking ridge (8a) of the locking part (8) to an unlocked position and in the unlocked position pulling (S6) the pipe (1) out from the catch housing (3) at least until the ridge (2a) overcomes the locking ridge (8a) in the axial direction along the central axis of the catch housing (3).
